# EUROPEAN PATENT SPECIFICATION

(11) **EP 1 958 813 B1**
(45) Date of publication and mention of the grant of the patent: **30.03.2011**
(21) Application number: 08250551.2
(22) Date of filing: 18.02.2008
(51) Int. Cl.: B60K 23/02, B62M 7/02

(54) **Vehicle**
Fahrzeug
Véhicule

(30) Priority: 19.02.2007 JP 2007038696
(43) Date of publication of application: 20.08.2008
(73) Proprietor: Yamaha Hatsudoki Kabushiki Kaisha, Iwata-shi, Shizuoka 438-8501 (JP)
(72) Inventor: Mine, Yutaka c/o Yamaha Hatsudoki Kabushiki Kaisha, Shizuoka-ke 438-8501 (JP); Kawakami, Satoshi c/o Yamaha Hatsudoki Kabushiki Kaisha, Shizuoka-ken 438-8501 (JP)
(74) Representative: Lamb, Martin John Carstairs

(56) References cited:
- EP-A- 1 130 236
- EP-A- 1 148 214
- WO-A-2006/137519

## Description

### FIELD OF THE INVENTION

The present invention relates to a vehicle, and in particular to a straddle-type vehicle of underbone type.

### BACKGROUND TO THE INVENTION

Conventionally, an engine unit of swing type (referred below to as "swing type engine unit"), in which an engine and a transmission unit for transmission of a driving force generated by the engine to a rear wheel are made integral together and supported by a body frame to be able to swing, is widely used in a straddle-type vehicle of so-called underbone type, in which a part of a body frame is formed in the vicinity of rider's feet.

With a straddle-type vehicle, in which a swing type engine unit is used, it is general that a transmission unit, a generator, and a fan are provided along a crank shaft extending in a vehicle width direction.

An engine is provided on a vehicle center line, by which a vehicle width is divided into two halves, in view of a weight balance between the left and right of a straddle-type vehicle. Also, a transmission unit, specifically, a belt drive part included in a transmission unit is provided on the left (one side) of an engine to be separate from a rear wheel so as not to interfere with rotation of the rear wheel.

In contrast to a transmission unit provided on the left of an engine, a generator is provided on the right (the other side) of an engine to ensure a weight balance between the left and right of a straddle-type vehicle. Further, a fan is provided outwardly of a generator in a vehicle width direction. Such an arrangement is disclosed in, for example, JP-A-2001-241310 and its family member EP 1 130 263 A1, which disclose a vehicle according to the preamble of claim 1.

With a straddle-type vehicle, in which such swing type engine unit is used, a starter-motor is in some cases provided to start up an engine. The starter-motor is connected to a crank shaft of an engine through a starter clutch for transmission of a motive power of the starter-motor. In order to obtain a cooling effect by an outside air taken by a fan, the starter clutch is generally provided between a generator and an engine.

With the straddle-type vehicle of underbone type described above, a length of the vehicle in a longitudinal direction is increased when a radiator is arranged in that region forwardly of a swing type engine unit, against which a travel wind is liable to strike, specifically, in the vicinity of a downtube extending downwardly of a head pipe, which rotatably supports a front fork.

In order to obtain a cooling effect by air drawn in by a fan, it is conceivable to arrange a radiator outwardly of the fan in a vehicle width direction.

With the swing type engine unit described above, however, since the fan, the generator, and the starter clutch are provided along the crank shaft on the right of the engine, a space on the right of the engine is already made narrow. Therefore, when a radiator is provided outwardly of the fan in a vehicle width direction, there is caused a problem that a vehicle width is increased.

It is an object of the invention to provide a vehicle, in which a swing type engine unit is used and which can provide accessories such as a generator, a fan, etc. on the swing type engine unit while restricting a vehicle width.

### SUMMARY OF THE INVENTION

According to an aspect of the present invention there is provided a vehicle comprising a swing type engine unit comprising:
an engine having a crank shaft extending in a vehicle width direction;
a transmission unit connected to the crank shaft on one side of the engine;
a starter clutch for transmission of a motive power of a starter motor to the crank shaft; and
a starter-clutch accommodating body provided between the transmission unit and the engine and adapted to accommodate the starter clutch, wherein the starter-clutch accommodating body comprises:
   a housing having an opened surface opened in the vehicle width direction;
   a lid adapted to cover the opened surface and comprising a plate-shaped lid body portion and a frame portion provided along an outer edge of the lid body portion to extend substantially perpendicular to the lid body portion, wherein the frame portion comprises a bearing surface opposed to the opened surface and formed with a first annular groove; and
   a first annular seal member provided between the housing and the lid and at least partially fitted into the first annular groove.

The swing type engine unit may further comprise a generator connected to the crank shaft on an opposite side of the engine to the transmission unit. The engine unit may also comprise a fan connected to the crank shaft on the same side of the engine as the generator to draw in air.

The transmission unit may be adapted to transmit rotation of the crank shaft to a rear wheel through a transmission member. The transmission member may be provided outwardly of the engine in the vehicle width direction to extend from the rear wheel in a longitudinal direction of the vehicle.

The vehicle may further comprise a second seal member, through which the crank shaft is inserted. The lid body portion may be formed with a crank-shaft insertion hole, through which the crank shaft may be inserted. The crank-shaft insertion hole may be formed on an inner peripheral surface thereof with a second annular groove, into which at least a part of the second seal member may be fitted.

The transmission unit may comprise a drive pulley, round which the transmission member is stretched, wherein the drive pulley includes a crank-shaft receiving portion, through which the crank shaft is inserted.

The crank shaft may comprise first and second sawtooth portions formed on at least a part of an outer peripheral surface of the crank shaft on a side, on which the starter-clutch accommodating body is provided, with a vehicle center line as a reference. The sawtooth portions may be defined by serrations, splines, castellations or the like. The first sawtooth portion may be adapted to engage the crank shaft receiving portion. The second sawtooth portion may be adapted to engage the starter clutch. The crank shaft may further comprise a non-sawtooth flat portion formed on the outer peripheral surface of the crank shaft between the first sawtooth portion and the second sawtooth portion.

A radiator may be provided outwardly of the fan in the vehicle width direction and laterally of the fan.

The vehicle may further comprise a fan cover adapted to cover the fan. The fan cover may comprise a discharge port, through which air drawn in by the fan is discharged. The fan cover may also comprise a plurality of rod-shaped portions provided at a predetermined interval on the discharge port, wherein the rod-shaped portions are tapered to narrow in an air discharge direction.

The starter-clutch accommodating body may store therein a liquid adapted to cool the starter clutch.

According to another aspect of the present invention there is provided a straddle-type vehicle comprising a swing type engine unit including an engine having a crank shaft, which extends in a vehicle width direction, a transmission unit connected to the crank shaft on one side of the engine to transmit rotation of the crank shaft to a rear wheel through a transmission member, a generator connected to the crank shaft on the other side of the engine, and a fan connected to the crank shaft on the other side of the engine to lead an outside air, and wherein the transmission member is provided outwardly of the engine in the vehicle width direction to extend from the rear wheel in a longitudinal direction of the vehicle, the swing type engine unit comprises a starter-clutch accommodating body to accommodate a starter clutch for transmission of a motive power of a starter motor, which starts up the engine, and the starter-clutch accommodating body is provided between the transmission unit and the engine.

The transmission unit and the starter-clutch accommodating body may be arranged on one side of the engine, and the generator and the fan may be arranged on the other side of the engine. Therefore, a space on the other side of the engine, on which the generator and the fan are arranged, is inhibited from becoming narrow, and a space, in which other vehicular accessories (for example, a radiator) are arranged, can be adequately ensured on the other side of the engine without an increase in vehicle width.

The starter-clutch accommodating body comprises a housing having an opened surface opened in the vehicle width direction, a lid, which covers the opened surface, and a first annular seal member provided between the housing and the lid, the lid comprises a plate-shaped lid body portion and a frame portion provided along an outer edge of the lid body portion to extend substantially perpendicular to the lid body portion, the frame portion comprises a bearing surface opposed to the opened surface, and the bearing surface is formed with a first annular groove, into which at least a part of the first seal member is fitted.

The vehicle may further comprise a second seal member, through which the crank shaft is inserted, and that the lid body portion is formed with a crank-shaft insertion hole, through which the crank shaft is inserted, and the crank-shaft insertion hole is formed on an inner peripheral surface thereof with a second annular groove, into which at least a part of the second seal member is fitted.

The transmission unit comprises a drive pulley, round which the transmission member is stretched, the drive pulley includes a crank-shaft receiving portion, through which the crank shaft is inserted, a first sawtooth portion, which engages with the crank-shaft receiving portion, and a second sawtooth portion, which engages with the starter-clutch, are formed on at least a part of an outer peripheral surface of the crank shaft on a side, on which the starter-clutch accommodating body is provided, with a vehicle center line as a reference, and a non-sawtooth flat portion is formed on the outer peripheral surface positioned between the first sawtooth portion and the second sawtooth portion.

A radiator may be provided outwardly of the fan in the vehicle width direction and laterally of the fan.
in the vehicle may further comprise a fan cover, which covers the fan, and that the fan cover comprises a discharge port, through which an outside air taken by the fan is discharged, a plurality of rod-shaped portions are provided at a predetermined interval on the discharge port, and the rod-shaped portions are shaped in cross section in a direction, in which the outside air passes, to be tapered becoming narrow toward the outside air as discharged.

The starter-clutch accommodating body may store therein a liquid (for example, an oil), which cools the starter clutch.

According to the invention, it is possible in a straddle-type vehicle of underbone type, in which a swing type engine unit is used, to provide accessories such as a generator, a fan, etc. on the swing type engine unit while restricting a vehicle width.

### BRIEF DESCRIPTION OF THE DRAWINGS

These and other aspects of the present invention will now be described, by way of example only, with reference to the accompanying drawings, in which:
Fig. 1 is a left side view showing a motorcycle, defining a straddle-type vehicle according to an embodiment of the invention;
Fig. 2 is a left side view showing an engine and a transmission case, which constitute a swing type engine unit according to the embodiment of the invention;
Fig. 3 is a schematic cross-sectional view of the transmission case taken along the line A-A in Fig. 2;
Fig. 4 is a view showing the detailed construction of a generator, a cooling fan, and a radiator shown in Fig. 3;
Fig. 5 is a plan view showing a fan shroud of Fig. 4 as viewed from an internal perspective;
Fig. 6 is a view showing the fan shroud in direction C of Fig. 5;
Fig. 7 is a cross sectional view showing rod-shaped portions and taken along the line D-D in Fig. 6;
Fig. 8 is a view showing the construction of a starter clutch, a starter-clutch case, and a drive pulley shown in Fig. 3;
Fig. 9 is a cross sectional view showing the starter clutch and the starter-clutch case and taken along the line B-B in Fig. 2;
Fig. 10 is a perspective view showing a right portion of the transmission case according to the embodiment of the invention;
Fig. 11 is a plan view showing a lid of the starter-clutch case according to the embodiment of the invention as viewed from an interior perspective;
Fig. 12 is a cross sectional view showing the lid and taken along the line E-E in Fig. 11;
Fig. 13 is a view showing the construction of a driven pulley and a drive shaft shown in Fig. 3; and
Fig. 14 is a right side view showing the structure of an exhaust pipe according to the embodiment of the invention.

### DETAILED DESCRIPTION OF THE DRAWINGS

An embodiment of a straddle-type vehicle according to the invention will be described with reference to the drawings. The same or similar parts in the following figures are denoted by the same or similar reference numerals. However, it should be kept in mind that the drawings are schematic and ratios of respective dimensions may be different from reality.

Accordingly, specific dimensions, etc. should be determined taking the following descriptions into consideration. Also, there are of course included parts, of which dimensional relationships and ratios are different from one another among the figures.

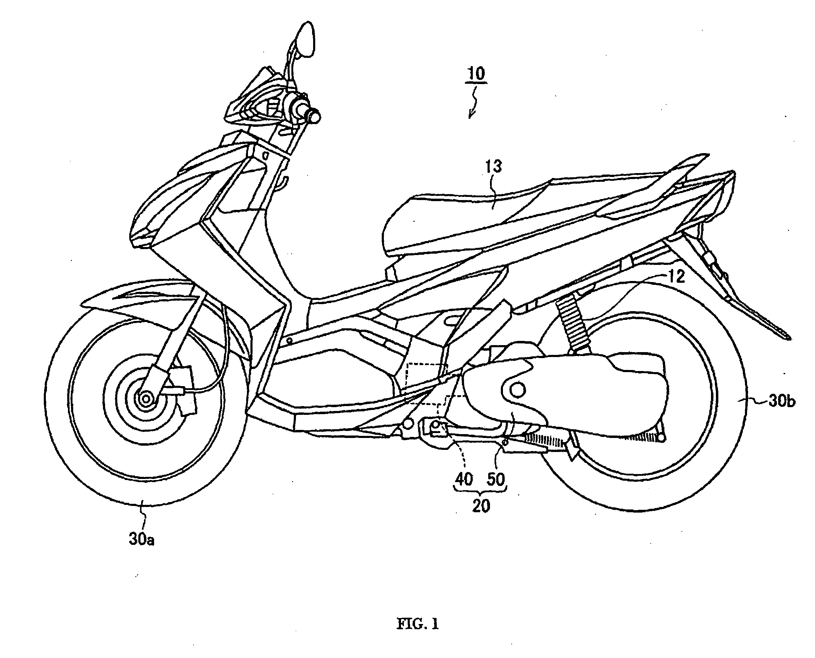

Fig. 1 is a left side view showing a motorcycle 10, defining a vehicle according to an embodiment of the invention. As shown in Fig. 1, the motorcycle 10 is a so-called underbone type motorcycle, on a lower portion of which a body frame (not shown) is arranged as compared with general motorcycles.

The motorcycle 10 includes a front wheel 30a and a rear wheel 30b, and uses a swing type engine unit 20, which is composed of an engine 40 and a transmission case 50, to drive the rear wheel 30b. The swing type engine unit 20 is arranged below a seat 13, on which a rider is seated.

The engine 40 is a water-cooled four-stroke engine and arranged to be substantially horizontal.

The transmission case 50 is arranged rearwardly of and contiguous to the engine 40. A lower side of a front portion of the transmission case 50 is journaled by a body frame. An upper side of a rear portion of the transmission case 50 is supported by a cushion or suspension unit 12, which is fixed to the body frame, to be able to swing.

In addition, according to the embodiment, spoke wheels are adopted for the front wheel 30a and the rear wheel 30b.

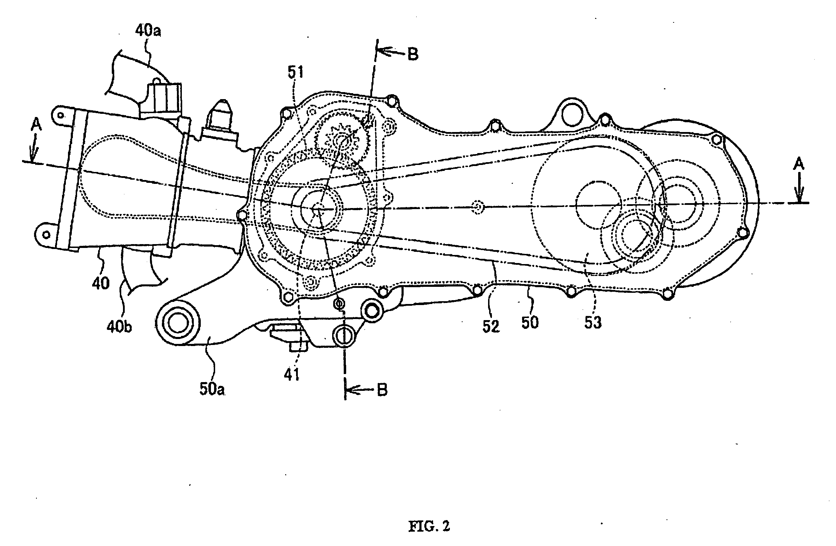

The construction of the swing type engine unit 20 according to the embodiment will now be described in detail with reference to Figs. 2 to 14.

First, the whole schematic construction of the swing type engine unit 20 according to the embodiment will be described. Fig. 2 is a left side view showing the engine 40 and the transmission case 50, which constitute the swing type engine unit 20 according to the embodiment. In addition, Fig. 2 also shows a part of internal structures of the engine 40 and the transmission case 50.

An intake pipe 40a is connected to an upper portion of the engine 40. An exhaust pipe 40b is connected to a lower portion of the engine 40. An arm 50a is formed on the transmission case 50 to project forward from the lower side of the front portion of the transmission case 50.

The transmission case 50 accommodates a transmission unit (not shown), by which a driving force generated by the engine 40 is transmitted to the rear wheel 30b. The transmission unit adopts a V-belt type automatic transmission mechanism.

Specifically, the transmission unit comprises a drive pulley 51, a drive belt 52, and a driven pulley 53. The drive pulley 51 is arranged on the front portion of the transmission case 50 and fixed to a crank shaft 41 extending from the engine 40 in a vehicle width direction. The driven pulley 53 is arranged on the rear portion of the transmission case 50. The drive belt 52 is stretched round the drive pulley 51 and the driven pulley 53.

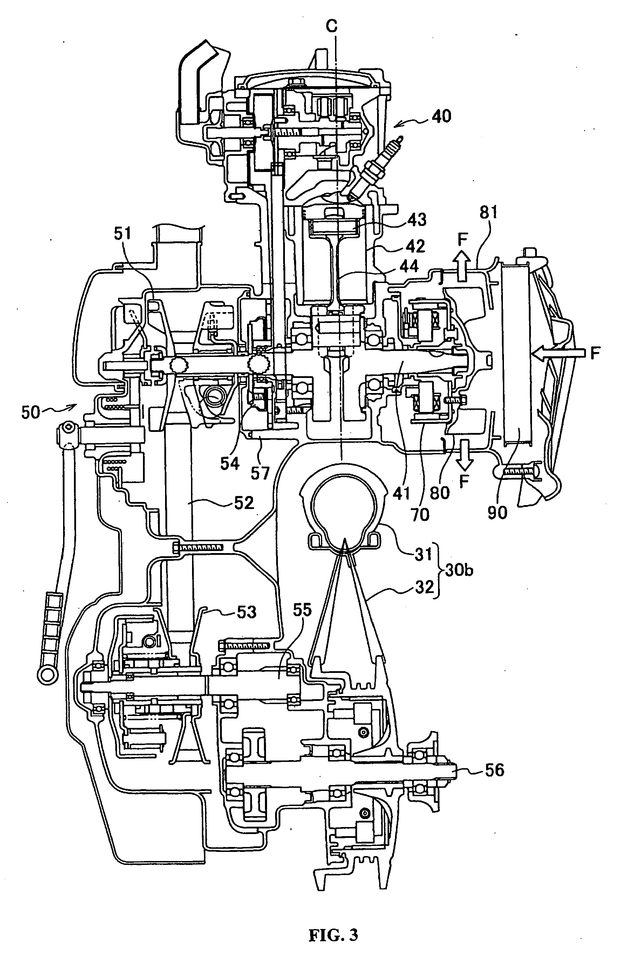

Fig. 3 is a view showing a schematic cross section of the transmission case 50 taken along the line A-A in Fig. 2. In Fig. 3, hatch representation in the figure is omitted.

As shown in Fig. 3, the engine 40 is arranged on a vehicle center line C, by which a vehicle width is divided substantially into two halves. A single cylinder 42 is formed on the engine 40. Provided on the cylinder 42 are a piston 43 and a connecting rod 44 for connection of the piston 43 and the crank shaft 41.

The transmission case 50 accommodates therein the crank shaft 41, an alternator (generator) 70, a starter clutch 54, the drive pulley 51, the drive belt 52, the driven pulley 53, a drive shaft 55, and a rear-wheel shat 56.

The alternator 70 is connected to the crank shaft 41 on the right of the vehicle center line C. A cooling fan 80 is connected to the crank shaft 41 on the right of the alternator 70 to lead or draw in an outside air F to a radiator 90, etc.

The radiator 90 is arranged on the right of the cooling fan 80. A part of the cooling fan 80 is covered by a fan shroud 81.

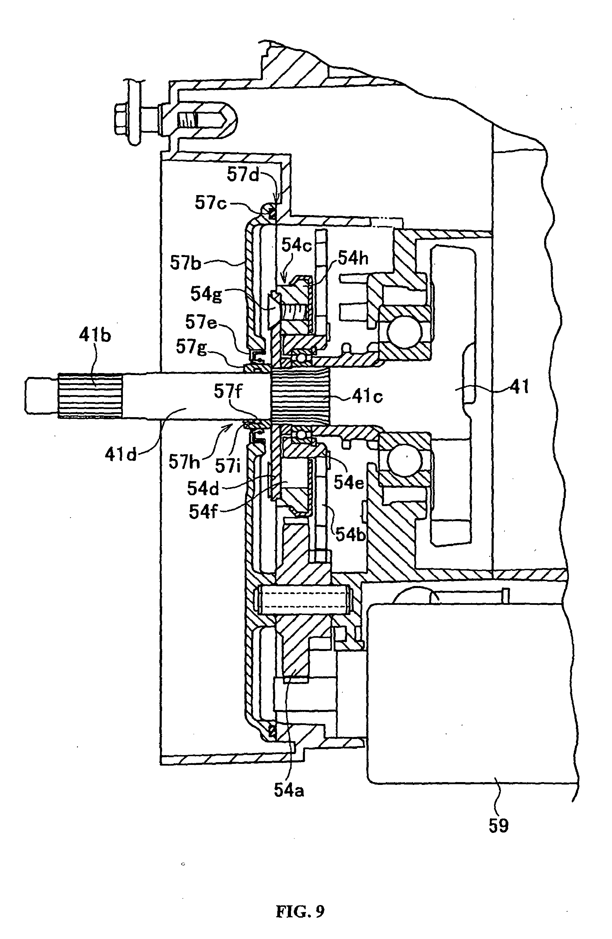

The starter clutch 54 is connected to the crank shaft 41 on the left of the vehicle center line C. The starter clutch 54 transmits a motive power of a starter-motor 59 (not shown in Fig. 3. See Fig. 9), which starts up the engine 40, to the crank shaft 41.

The starter clutch 54 is accommodated in a starter-clutch case 57. Oil is stored in the starter-clutch case 57.

The drive pulley 51 is connected to the crank shaft 41 on the left of the starter-clutch case 57. The drive belt 52 is provided in a longitudinal direction to be separated outwardly of the engine 40 from the rear wheel 30b in the vehicle width direction. The driven pulley 53 is connected to the drive shaft 55. The rear-wheel shat 56 is arranged rearwardly of the drive shaft 55.

In addition, a spoke wheel 32 is connected to the rear-wheel shaft 56. A tire 31 is mounted to the spoke wheel 32.

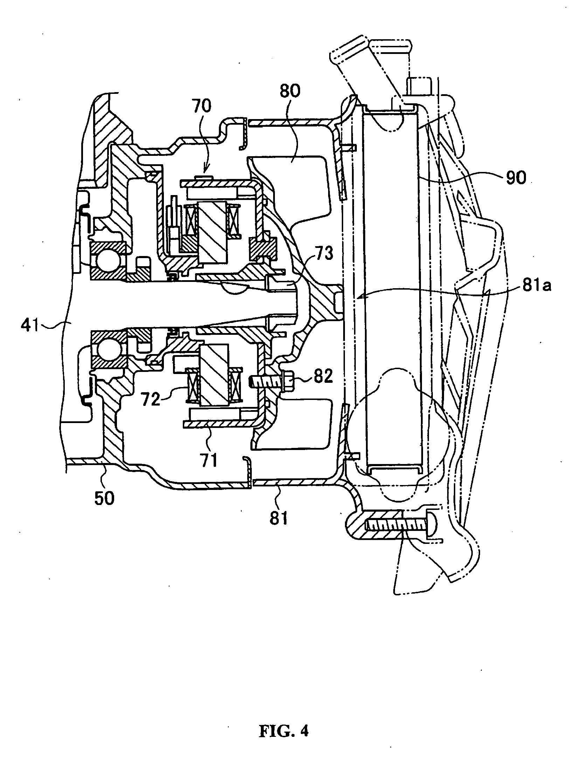

The construction of the alternator 70, the cooling fan 80, and the radiator 90 shown in Fig. 3 will now be described. Fig. 4 shows the construction of the alternator 70, the cooling fan 80, and the radiator 90 shown in Fig. 3.

The alternator 70 includes a flywheel magnet rotor 71 and a magnet stator 72. The flywheel magnet rotor 71 is fixed to a tip end of the crank shaft 41 by a nut 73. The magnet stator 72 is fixed to the transmission case 50.

The cooling fan 80 is fixed to a back surface of the flywheel magnet rotor 71 by a bolt 82. That is, the cooling fan 80 and the flywheel magnet rotor 71 rotate together upon rotation of the crank shaft 41. A part of the cooling fan 80 is covered by the fan shroud 81.

The fan shroud 81 is provided contiguous to the transmission case 50. The fan shroud 81 is formed with a shroud hole 81a, through which an outside air F is taken. Upon rotation of the cooling fan 80, an outside air F is drawn through the shroud hole 81a to cool the radiator 90, the alternator 70, etc.

The radiator 90 has a cooling water, which is heated by the cylinder 42, and cooled by an outside air F introduced by the cooling fan 80.

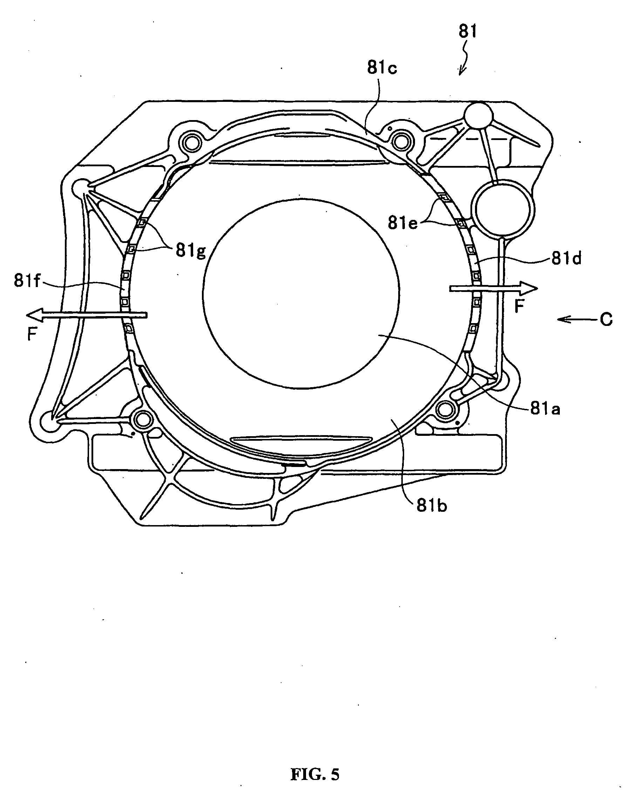

An explanation will now be given to a detailed shape of the fan shroud 81 shown in Fig. 4. Fig. 5 is a plan view showing the fan shroud 81 as viewed from an interior or inside perspective.

As shown in Fig. 5, the fan shroud 81 includes a flat portion 81b formed with the shroud hole 81a and a frame portion 81c surrounding the cooling fan 80. In addition, according to the embodiment, the fan shroud 81 is formed of an aluminum alloy.

The frame portion 81c is formed on vehicle front and rear sides thereof with discharge ports 81d, 81f, through which an outside air F introduced by the cooling fan 80 is discharged. Provided on the discharge ports 81d, 81f are a plurality of rod-shaped portions 81e, 81g, which prevent invasion of foreign matters from outside.

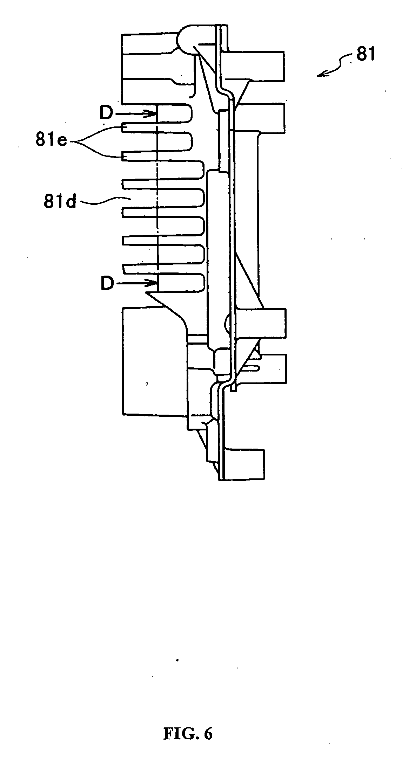

Fig. 6 is a view showing the fan shroud 81 as viewed in direction C in Fig. 5. As shown in Fig. 6, the respective rod-shaped portions 81e are shaped to taper off to become thin toward the vehicle center line C from the flat portion 81b. Also, according to the embodiment, the respective rod-shaped portions 81e are provided at substantially equal intervals.

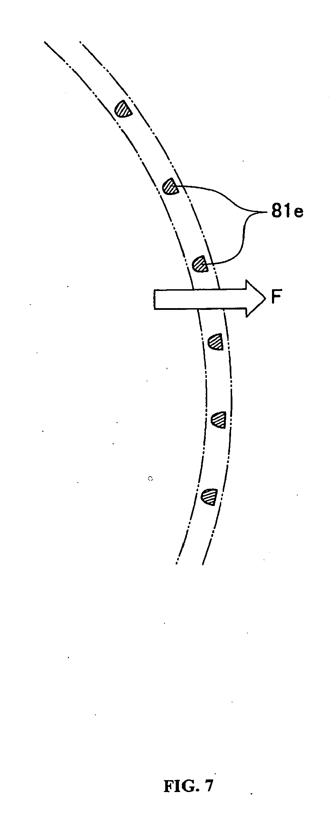

Fig. 7 is a cross sectional view showing the rod-shaped portions 81e and taken along the line D-D in Fig. 6. As shown in Fig. 7, the respective rod-shaped portions 81e are shaped in cross section to be tapered (tapered off) becoming narrow toward an outside air F as discharged.

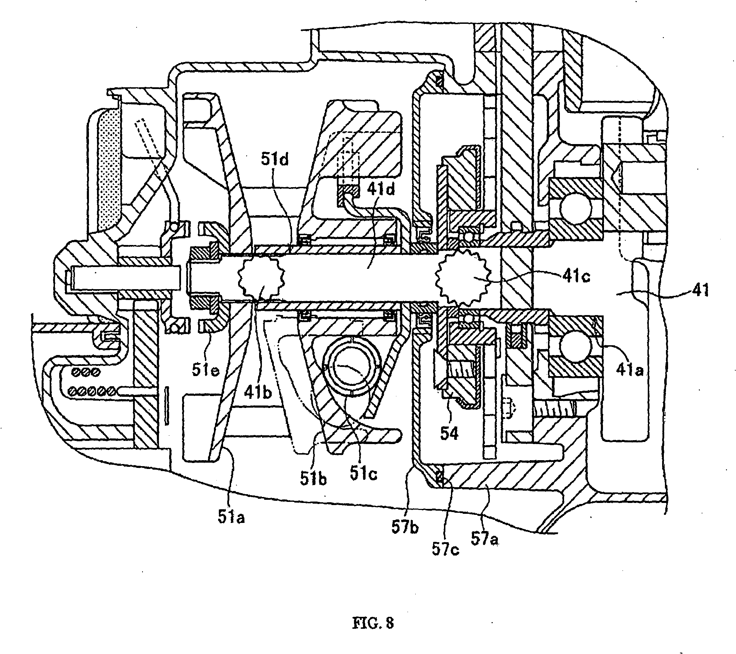

An explanation will now be given to the construction of the starter clutch 54, the starter-clutch case 57, and the drive pulley 51 shown in Fig. 3. Fig. 8 is a view showing the construction of the starter clutch 54, the starter-clutch case 57, and the drive pulley 51 shown in Fig. 3.

The starter-clutch case 57 accommodates therein the starter clutch 54 and stores therein a lubricating oil. Specifically, the starter-clutch case 57 includes a housing 57a, a lid 57b, and an O-ring 57c.

The housing 57a surrounding the starter clutch 54 is formed integrally with the transmission case 50 and has an opened surface directed outward in the vehicle width direction.

The lid 57b is fixed to the transmission case 50 to cover the opened surface of the housing 57a.

The O-ring 57c is provided between the housing 57a and the lid 57b. According to the embodiment, the O-ring 57c is formed of an elastic member. Detailed structures of the starter clutch 54 and the starter-clutch case 57 are described later.

The drive pulley 51 includes a stationary part 51a and a moving part 51b. The stationary part 51a is interposed between a drive boss 51d, through which the crank shaft 41 is inserted, and a nut 51e to be fixed to the crank shaft 41. The moving part 51b is fitted onto the drive boss 51d to be moved in the vehicle width direction.

The moving part 51b holds a centrifugal roller 51c. When the crank shaft 41 is increased in rotating speed, a centrifugal force acting on the centrifugal roller 51c increases and the centrifugal roller 51c pushes the moving part 51b to enlarge an effective diameter of the drive belt 52.

Formed on an outer peripheral surface 41a of the crank shaft 41 are serrations 41b, which engage with the stationary part 51a of the drive pulley 51, and serrations 41c, which engage with a part of the starter clutch 54.

On the other hand, a flat portion 41d being non-toothed is provided on the outer peripheral surface 41a between the serrations 41b and the serrations 41c.

An explanation will now be given to a detailed structure of the starter clutch 54. Fig. 9 is a cross sectional view showing the starter clutch 54 and the starter-clutch case 57 and taken along the line B-B in Fig. 2.

The starter clutch 54 includes an idle gear 54a, a driven gear 54b, a one-way clutch 54c, and a clutch bracket 54d. The clutch bracket 54d is engaged by the crank shaft 41.

The idle gear 54a transmits a driving force from an output shaft of the starter-motor 59 to the driven gear 54b. The driven gear 54b transmits a driving force, which is transmitted by the idle gear 54a, to the crank shaft 41 via the one-way clutch 54c and the clutch bracket 54d.

In addition, the one-way clutch 54c includes a clutch inner race 54e, a clutch roller 54f, and a clutch outer race 54h.

The clutch inner race 54e is coupled to the driven gear 54b. The clutch outer race 54h is coupled to the clutch bracket 54d by a bolt 54g. The clutch roller 54f is arranged in a space defined between the clutch inner race 54e and the clutch outer race 54h.

With the one-way clutch 54c, when the engine starts up, the clutch roller 54f is latched on the clutch inner race 54e and the clutch outer race 54h to transmit rotation of the driven gear 54b to the clutch bracket 54d.

With the one-way clutch 54c, after the engine starts up, the clutch outer race 54h rotates at higher speed than that of the clutch inner race 54e, so that the clutch roller 54f separates from the clutch inner race 54e and the clutch outer race 54h.

An explanation will now be given to a detailed structure of the starter-clutch case 57. As shown in Fig. 9, the starter-clutch case 57 includes an O-ring 57f, a collar 57g, and an oil seal 57e between an insertion hole 57h formed on the lid 57b and the crank shaft 41.

The crank shaft 41 is inserted through the O-ring 57f. The collar 57g is formed with an annular groove 57i, into which the O-ring 57f is fitted. The collar 57g is fixed to the crank shaft 41. The oil seal 57e is provided between the collar 57g and an inner peripheral surface of the insertion hole 57h of the lid 57b.

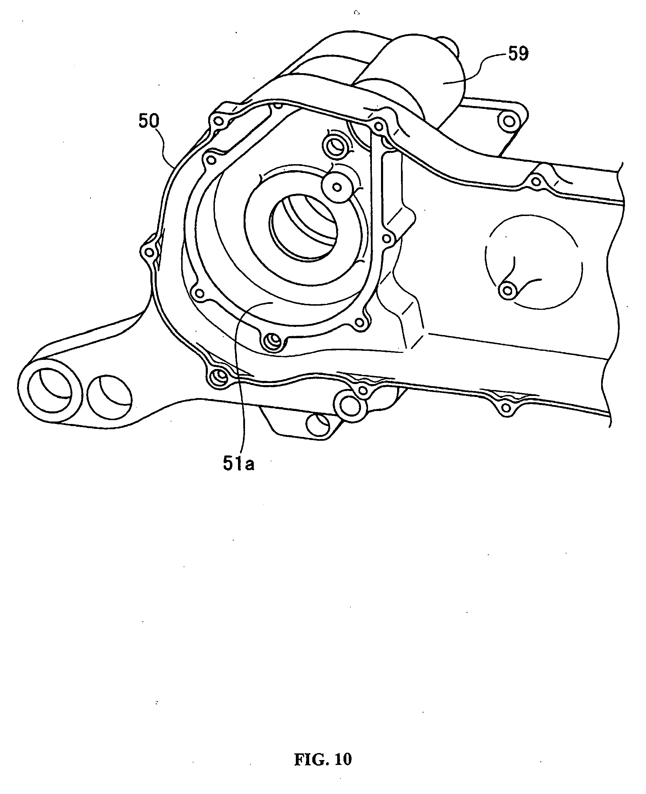

Fig. 10 is a schematic, perspective view showing a left portion of the transmission case 50. As shown in Fig. 10, the housing 51a of the starter-clutch case 57 is formed integrally with the transmission case 50 and has an opening.

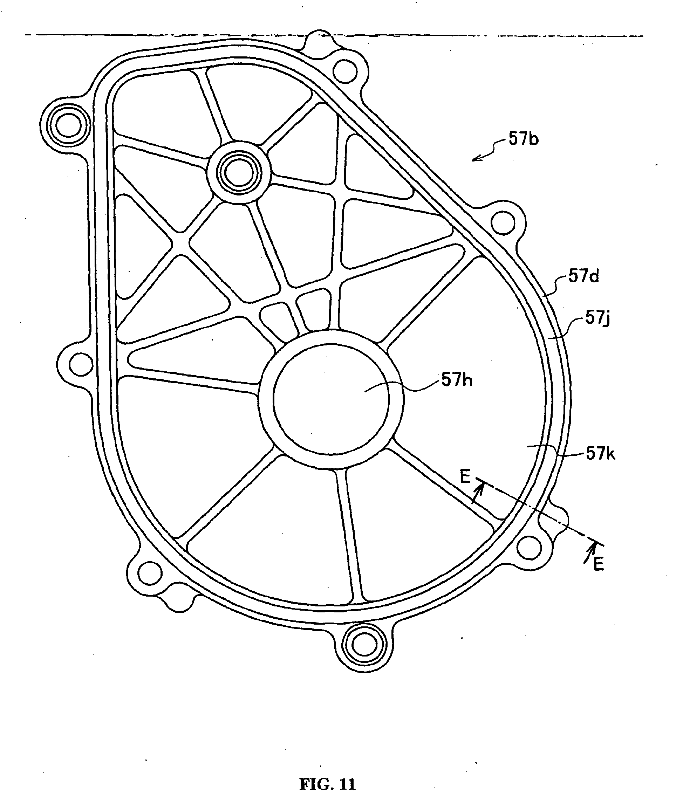

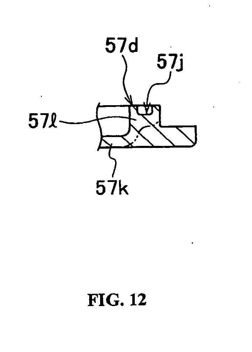

Fig. 11 is a plan view showing the lid 57b of the starter-clutch case 57 as viewed from inside. Fig. 12 is a cross sectional view showing the lid 57b and taken along the line E-E in Fig. 11.

As shown in Figs. 11 and 12, the lid 57b is formed with the insertion hole 57h, a lid body portion 57k, a frame portion 571, a bearing surface 57d, and an annular groove 57j.

The lid body portion 57k is plate-shaped. The frame portion 571 extends substantially perpendicular to the lid body portion 57k. The bearing surface 57d is formed on an upper surface of the frame portion 571. The annular groove 57j is formed in a substantially central position of the bearing surface 57d.

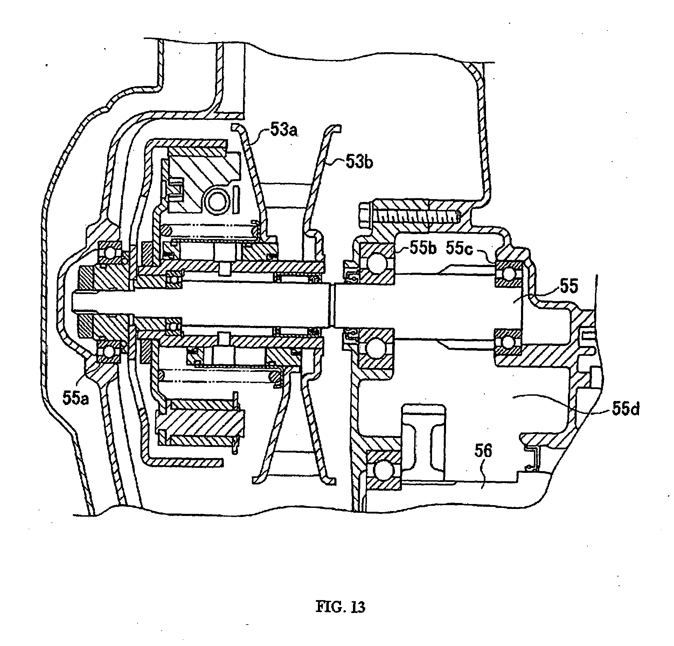

An explanation will now be given to the construction of the driven pulley 53 and the drive shaft 55 shown in Fig. 3. Fig. 13 is a view showing the construction of the driven pulley 53 and the drive shaft 55 shown in Fig. 3.

The drive shaft 55 is supported at three points by a bearing 55a, a bearing 55b, and a bearing 55c.

The driven pulley 53 includes a stationary part 53b connected to the drive shaft 55 and a moving part 53a being movable axially of the drive shaft 55.

One end of the drive shaft 55 enters into a transmission chamber 55d. A gear transmission mechanism (not shown) is arranged as a secondary transmission system in the transmission chamber 55d.

Accordingly, a driving force from the crank shaft 41 is transmitted to the drive shaft 55 via the drive pulley 51, the drive belt 52, and the driven pulley 53 and transmitted to the rear-wheel shat 56 via the gear transmission mechanism from the drive shaft 55.

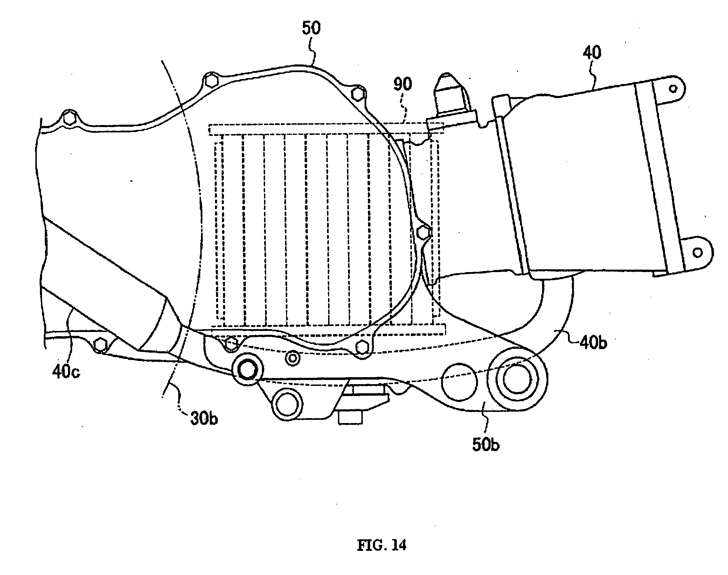

An explanation will now be given to the structure of the exhaust pipe 40b according to the embodiment. Fig. 14 is a right side view schematically showing the engine 40, the transmission case 50, and the exhaust pipe 40b.

As shown in Fig. 14, the exhaust pipe 40b extends rearward from a lower portion of the engine 40 to pass between the left arm 50a and the right arm 50b and below the transmission case 50. A muffler 40c is arranged at a tip end of the exhaust pipe 40b.

Specifically, the exhaust pipe 40b is arranged below the alternator 70 shown in Fig. 3. In order to ensure a minimum ground clearance, the transmission case 50 below the alternator 70 is formed with a recess (not shown), in which the exhaust pipe 40b is arranged.

According to the embodiment, the drive belt 52 is separated on the left of the engine 40 from the rear wheel 30b and provided in a longitudinal direction of the vehicle. The starter-clutch case 57, which accommodates therein the starter clutch 54, is provided between the drive pulley 51 and the engine 40.

Accordingly, the starter-clutch case 57 can be arranged on the left of the engine 40 and only the alternator 70 and the cooling fan 80 are arranged on the crank shaft 41 on the right of the engine 40. Therefore, a space on the right of the engine 40 is made free from becoming narrow, so that a space, in which the radiator 90 is arranged, is adequately ensured on the right of the engine 40 without an increase in vehicle width. That is, even with the construction, in which the radiator 90 is arranged on the right of the engine 40, a vehicle width can be made small.

Further, the starter clutch 54 is accommodated in the starter-clutch case 57 whereby dust or the like is prevented from adhering to the starter clutch 54, so that abnormal noise is prevented from generating from the starter clutch 54.

Also, since the drive belt 52 is provided in the longitudinal direction of the vehicle to be separated from the rear wheel 30b on the left of the engine 40, it becomes possible to use a wheel (the spoke wheel 32), which needs a predetermined width for mounting.

According to the embodiment, the O-ring 57c fitted into the bearing surface 57d of the lid 57b is provided between the housing 57a and the lid 57b of the starter-clutch case 57 whereby a lubricating oil is prevented from leaking from a joined portion of the housing 57a and the lid 57b.

In particular, even when the lid 57b is decreased in stiffness by forming the lid 57b thin in order to make the starter-clutch case 57 small in thickness in the vehicle width direction, the O-ring 57c can fill in the joined portion between the housing 57a and the lid 57b.

According to the embodiment, the annular groove 57i, into which the O-ring 57f is fitted, is formed on the inner peripheral surface of the insertion hole 57h formed on the lid body portion 57k of the lid 57b. Accordingly, no clearance is generated between the lid 57b and the crank shaft 41, so that it is possible to prevent leakage of a lubricating oil.

Also, according to the embodiment, the serrations 41b, which engage with the drive pulley 51, and the serrations 41c, which engage with the starter clutch 54, are formed on the crank shaft 41. In contrast, no serration is formed on the crank shaft 41 between the serrations 41b and the serrations 41c.

Accordingly, the drive pulley 51 is surely fixed to the crank shaft 41 and the starter clutch 54 is surely fixed to the crank shaft 41. Further, the flat portion 41d formed with no serration is provided whereby it becomes possible to mount the O-ring 57f to the flat portion 41d.

Also, the provision of the flat portion 41d formed with no serration leads to reduction in cost required for the working of the crank shaft 41 as compared with the case where serrations are formed on an overall, outer peripheral surface 41a of the crank shaft 41.

According to the embodiment, the plurality of rod-shaped portions 81e, 81g provided on the discharge ports 81d, 81f of the fan shroud 81 are shaped in cross section to taper becoming thin toward an outside air F as discharged whereby flow of the outside air F becomes hardly turbulent, so that flow noise attributable to turbulence of flow of the outside air F is decreased.

As described above, while the invention has been described by way of the embodiment, it should be understood that the invention is not limited by descriptions and drawings, which constitute a part of the disclosure. The disclosure will make various substitutional modes for carrying out the invention, embodiments, and operational techniques apparent to those skilled in the art.

While the embodiment uses a spoke wheel, it is possible to use wheels such as cast wheel, disk wheel, etc. as well as a spoke wheel. While the embodiment described above uses a water-cooled four-stroke engine as the engine 40, an air-cooled engine may be used as well as a water-cooled engine. In this case, the radiator 90 can be dispensed with.

Also, the discharge ports 81d, 81f, through which an outside air F introduced by the cooling fan 80 is discharged, are formed on the vehicle front and rear sides of the fan shroud 81, but discharge ports in addition to the discharge ports 81d, 81f may be formed on upper and lower portions of the fan shroud 81. In this case, a plurality of rod-shaped portions may be formed on the discharge ports on the upper and lower portions of the fan shroud 81.

Also, since foreign matters are liable to invade the respective rod-shaped portions 81e, 81g formed on the fan shroud 81 on the vehicle front side from the vehicle front side rather than the vehicle rear side, the respective rod-shaped portions 81g on the vehicle front side may be formed to be thicker than the respective rod-shaped portions 81e on the vehicle rear side.

Further, in order to prevent foreign matters from invading the discharge ports 81d, 81f, covers may be provided on the discharge ports 81d, 81f.

Further, while the embodiment described above uses the drive belt 52 for the transmission unit, a system using a belt is not limitative but a system using a chain or the like may be adopted.

According to the embodiment described above, the drive pulley 51 and the starter-clutch case 57 are arranged on the left and the alternator 70 and the cooling fan 80 are arranged on the right, but the drive pulley 51 and the starter-clutch case 57 may be arranged on the right and the alternator 70 and the cooling fan 80 may be arranged on the left.

Also, the embodiment has been described with respect to a straddle-type vehicle of underbone type, in which a swing type engine unit is used. However, the layout of the electrically-driven unit, the alternator, the fan, the starter-clutch case, etc. described above is applicable to three-wheelers or four-wheelers, etc. In this case, an electrically-driven unit, an alternator, a fan, a starter-clutch case, etc. are arranged between two rear wheels.

In this manner, it should be understood that the invention embraces various embodiments not described herein. Accordingly, the invention is limited only by the inventive specified matters related to claims, which are appropriate from the above descriptions.

### Description of Reference Numerals and Signs

C: vehicle center line, F: outside air, 10: motorcycle, 12: cushion unit, 13: seat, 20: swing type engine unit, 30a: front wheel, 30b: rear wheel, 31: tire, 32: spoke wheel, 40: engine, 40a: intake pipe, 40b: exhaust pipe, 40c: muffler, 41: crank shaft, 41a: outer peripheral surface, 41b: serration, 41c: serration, 41d: flat portion, 42: cylinder, 43: piston, 44: connecting rod, 50 : transmission case, 50a, 50b: arm, 51: drive pulley, 51a: moving part, 51b: moving part, 51c: centrifugal roller, 51c: O-ring, 51d: drive boss, 51e: nut, 52: drive belt, 53: driven pulley, 53a: moving part, 53b: stationary part, 54: starter clutch, 54a: idle gear, 54b: driven gear, 54c: one-way clutch, 54d: clutch bracket, 54e: clutch inner race, 54f: clutch roller, 54g: bolt, 54h: clutch outer race, 55: drive shaft, 55a: bearing, 55d: transmission chamber, 56: rear-wheel shat, 57: starter-clutch case, 57a: housing, 57b: lid, 57c: O-ring, 57d: bearing surface, 57e: oil seal, 57f: O-ring, 57g: collar, 57h: insertion hole, 57j: annular groove, 57k: lid body portion, 571: frame portion, 59: starter-motor, 70: alternator, 71: flywheel magnet rotor, 72: magnet stator, 73: nut, 80: cooling fan, 81: fan shroud, 81a: shroud hole, 81b: flat portion, 81c: frame portion, 81d, 81f: discharge port, 81e, 81g: rod-shaped portion, 82: bolt, 90: radiator

## Claims

1. A vehicle (10) comprising a swing type engine unit (20) comprising:
an engine (40) having a crank shaft (41) extending in a vehicle width direction;
a transmission unit connected to the crank shaft (41) on one side of the engine (40);
a starter clutch (54) for transmission of a motive power of a starter motor (59) to the crank shaft (41); and
a starter-clutch accommodating body (57) adapted, to accommodate the starter clutch (54), **characterised in that** said body (57) is provided between the transmission unit and the engine (40) wherein the starter-clutch accommodating body (57) comprises:
a housing (57a) having an opened surface opened in the vehicle width direction;
a lid (57b) adapted to cover the opened surface and comprising a plate-shaped lid body portion (57k) and a frame portion (571) provided along an outer edge of the lid body portion (57k) to extend substantially perpendicular to the lid body portion (57k), wherein the frame portion (571) comprises a bearing surface (57d) opposed to the opened surface and formed with a first annular groove (57j); and
a first annular seal member (57c) provided between the housing (57a) and the lid (57b) and at least partially fitted into the first annular groove (57j).

2. The vehicle (10) according to claim 1, wherein the swing type engine unit (20) further comprises:
a generator (70) connected to the crank shaft (41) on an opposite side of the engine (40) to the transmission unit; and
a fan (80) connected to the crank shaft (41) on the same side of the engine (40) as the generator (70) to draw in air.

3. The vehicle (10) according to claim 1 or 2, wherein the transmission unit is adapted to transmit rotation of the crank shaft (41) to a rear wheel (30b) through a transmission member (52) provided outwardly of the engine (40) in the vehicle width direction to extend from the rear wheel (30b) in a longitudinal direction of the vehicle (10).

4. The vehicle (10) according to any preceding claim, further comprising a second seal member (57f), through which the crank shaft (41) is inserted, and
wherein the lid body portion (57k) is formed with a crank-shaft insertion hole (57h), through which the crank shaft (41) is inserted, and
the crank-shaft (41) insertion hole (57h) is formed on an inner peripheral surface thereof with a second annular groove (57i), into which at least a part of the second seal member (57f) is fitted.

5. The vehicle (10) according to claims 3 and 4, wherein the transmission unit comprises a drive pulley (51), round which the transmission member (52) is stretched, wherein the drive pulley (51) includes a crank-shaft receiving portion, through which the crank shaft is inserted.

6. The vehicle (10) according to claim 5, wherein the crank shaft (41) comprises:
first and second sawtooth portions (41b, 41c) formed on at least a part of an outer peripheral surface of the crank shaft (41) on a side, on which the starter-clutch accommodating body (57) is provided, with a vehicle center line (c) as a reference, wherein the first sawtooth portion (41b) is adapted to engage the crank shaft receiving portion and the second sawtooth portion (41c) is adapted to engage the starter clutch (54); and
a non-sawtooth flat portion (41d) is formed on the outer peripheral surface of the crank shaft (41) between the first sawtooth portion (41b) and the second sawtooth portion (41c) .

7. The vehicle (10) according to any preceding claim, wherein a radiator (90) is provided outwardly of the fan (80) in the vehicle width direction and laterally of the fan (80).

8. The vehicle (10) according to any preceding claim, further comprising a fan cover (81) adapted to cover the fan (80), and comprising:
a discharge port (81d, 81f), through which air drawn in by the fan (80) is discharged; and
a plurality of rod-shaped portions (81e, 81f) provided at a predetermined interval on the discharge port (81d, 81f), wherein the rod-shaped portions (81e, 81f) are tapered to narrow in an air discharge direction (F).

9. The vehicle (10) according to any preceding claim, wherein the starter-clutch accommodating body (57) stores therein a liquid adapted to cool the starter clutch (54).

10. A straddle-type vehicle (10) comprising a swing type engine unit (20) including
an engine (40) having a crank shaft (41), which extends in a vehicle width direction,
a transmission unit connected to the crank shaft (41) on one side of the engine (40) to transmit rotation of the crank shaft (41) to a rear wheel (30b) through a transmission member (52),
a generator (70) connected to the crank shaft (41) on the other side of the engine (40), and
a fan (80) connected to the crank shaft (41) on the other side of the engine (40) to lead an outside air, and
wherein the transmission member (52) is provided outwardly of the engine (40) in the vehicle width direction to extend from the rear wheel (30b) in a longitudinal direction of the vehicle (10),
the swing type engine unit (20) comprises a starter-clutch accommodating body (57) to accommodate a starter clutch (54) for transmission of a motive power of a starter motor (59), which starts up the engine (40), and **characterized in that**
the starter-clutch accommodating body (57) is provided between the transmission unit and the engine (40).

## Patentansprüche

1. Fahrzeug (10), das eine Schwenktypmotoreinheit (20) aufweist, die aufweist:
einen Motor (40) mit einer Kurbelwelle (41), die sich in einer Breitenrichtung des Fahrzeuges erstreckt;
eine Getriebeeinheit, die mit der Kurbelwelle (41) auf einer Seite des Motors (40) verbunden ist;
eine Anlasserkupplung (54) für die Übertragung einer Treibkraft eines Anlassermotors (59) auf die Kurbelwelle (41); und
einen Anlasserkupplungsaufnahmekörper (57), der ausgebildet ist, um die Anlasserkupplung (54) aufzunehmen, **dadurch gekennzeichnet, dass** der Körper (57) zwischen der Getriebeeinheit und dem Motor (40) vorhanden ist, wobei der Anlasserkupplungsaufnahmekörper (57) aufweist:
ein Gehäuse (57a) mit einer offenen Fläche, die in der Breitenrichtung des Fahrzeuges offen ist;
einen Deckel (57b), der ausgebildet ist, um die offene Fläche abzudecken, und der einen plattenförmigen Deckelkörperabschnitt (57k) und einen Rahmenabschnitt (571) aufweist, der längs eines äußeren Randes des Deckelkörperabschnittes (57k) vorhanden ist, um sich im Wesentlichen senkrecht zum Deckelkörperabschnitt (57k) zu erstrecken, wobei der Rahmenabschnitt (571) eine Auflagefläche (57d) gegenüberliegend der offenen Fläche aufweist und mit einer ersten Ringnut (57j) ausgebildet ist; und
ein erstes ringförmiges Dichtungselement (57c), das zwischen dem Gehäuse (57a) und dem Deckel (57b) vorhanden ist und mindestens teilweise in die erste Ringnut (57j) eingepasst ist.

2. Fahrzeug (10) nach Anspruch 1, bei dem die Schwenktypmotoreinheit (20) außerdem aufweist:
einen Generator (70), der mit der Kurbelwelle (41) auf einer entgegengesetzten Seite des Motors (40) zur Getriebeeinheit verbunden ist; und
einen Lüfter (80), der mit der Kurbelwelle (41) auf der gleichen Seite des Motors (40) wie der Generator (70) verbunden ist, um Luft anzusaugen.

3. Fahrzeug (10) nach Anspruch 1 oder 2, bei dem die Getriebeeinheit ausgebildet ist, um eine Drehung der Kurbelwelle (41) auf ein Hinterrad (30b) mittels eines Übertragungselementes (52) zu übertragen, das außerhalb des Motors (40) in der Breitenrichtung des Fahrzeuges vorhanden ist, um sich vom Hinterrad (30b) aus in einer Längsrichtung des Fahrzeuges (10) zu erstrecken.

4. Fahrzeug (10) nach einem der vorhergehenden Ansprüche, das außerdem ein zweites Dichtungselement (57f) aufweist, durch das die Kurbelwelle (41) eingesetzt wird, und
bei dem der Deckelkörperabschnitt (57k) mit einem Kurbelwelleneinsetzloch (57h) ausgebildet ist, durch das die Kurbelwelle (41) eingesetzt wird, und
wobei das Einsetzloch (57h) für die Kurbelwelle (41) auf einer inneren Umfangsfläche davon mit einer zweiten Ringnut (57i) ausgebildet ist, in die mindestens ein Teil des zweiten Dichtungselementes (57f) eingepasst ist.

5. Fahrzeug (10) nach Anspruch 3 und 4, bei dem die Getriebeeinheit eine Antriebsriemenscheibe (51) aufweist, um die herum das Übertragungselement (52) gespannt wird, wobei die Antriebsriemenscheibe (51) einen Kurbelwellenaufnahmeabschnitt umfasst, durch den die Kurbelwelle eingesetzt wird.

6. Fahrzeug (10) nach Anspruch 5, bei dem die Kurbelwelle (41) aufweist:
einen ersten und zweiten Sägezahnabschnitt (41b, 41c), die auf mindestens einem Teil einer äußeren Umfangsfläche der Kurbelwelle (41) auf einer Seite ausgebildet sind, auf der der Anlasserkupplungsaufnahmekörper (57) vorhanden ist, mit einer Fahrzeugmittellinie (c) als Bezug, wobei der erste Sägezahnabschnitt (41b) ausgebildet ist, um mit dem Kurbelwellenaufnahmeabschnitt in Eingriff zu kommen, und wobei der zweite Sägezahnabschnitt (41c) ausgebildet ist, um mit der Anlasserkupplung (54) in Eingriff zu kommen; und
einen ebenen Abschnitt (41d) ohne Sägezähne, der auf der äußeren Umfangsfläche der Kurbelwelle (41) zwischen dem ersten Sägezahnabschnitt (41b) und dem zweiten Sägezahnabschnitt (41c) ausgebildet ist.

7. Fahrzeug (10) nach einem der vorhergehenden Ansprüche, bei dem ein Kühler (90) außerhalb des Lüfters (80) in der Breitenrichtung des Fahrzeuges und seitlich vom Lüfter (80) vorhanden ist.

8. Fahrzeug (10) nach einem der vorhergehenden Ansprüche, das außerdem einen Lüfterdeckel (81) aufweist, der ausgebildet ist, um den Lüfter (80) abzudecken, und der aufweist:
eine Austrittsöffnung (81 d, 81 f), durch die Luft, die vom Lüfter (80) angesaugt wird, austritt; und
eine Vielzahl von stabartigen Abschnitten (81e, 81f), die mit einem vorgegebenen Abstand an der Austrittsöffnung (81d, 81f) vorhanden ist, wobei die stabartigen Abschnitte (81e, 81f) kegelförmig sind, um sich in einer Luftaustrittsrichtung (F) zu verengen.

9. Fahrzeug (10) nach einem der vorhergehenden Ansprüche, bei dem der Anlasserkupplungsaufnahmekörper (57) darin eine Flüssigkeit speichert, die dazu vorgesehen ist, die Anlasserkupplung (54) zu kühlen.

10. Grätschsitz-Fahrzeug (10), das eine Schwenktypmotoreinheit (20) aufweist, die umfasst:
einen Motor (40) mit einer Kurbelwelle (41), die sich in einer Breitenrichtung des Fahrzeuges erstreckt;
eine Getriebeeinheit, die mit der Kurbelwelle (41) auf einer Seite des Motors (40) verbunden ist, um eine Drehung der Kurbelwelle (41) auf ein Hinterrad (30b) mittels eines Übertragungselementes (52) zu übertragen;
einen Generator (70), der mit der Kurbelwelle (41) auf der anderen Seite des Motors (40) verbunden ist; und
einen Lüfter (80), der mit der Kurbelwelle (41) auf der anderen Seite des Motors (40) verbunden ist, um eine Außenluft zu leiten, und
wobei das Übertragungselement (52) außerhalb des Motors (40) in der Breitenrichtung des Fahrzeuges vorhanden ist, um sich vom Hinterrad (30b) in einer Längsrichtung des Fahrzeuges (10) zu erstrecken,
wobei die Schwenktypmotoreinheit (20) einen Anlasserkupplungsaufnahmekörper (57) aufweist, um eine Anlasserkupplung (54) für eine Übertragung einer Treibkraft eines Anlassermotors (59) aufzunehmen, die den Motor (40) startet, und
**dadurch gekennzeichnet, dass**
der Anlasserkupplungsaufnahmekörper (57) zwischen der Getriebeeinheit und dem Motor (40) vorhanden ist.

## Revendications

1. Véhicule (10), comprenant une unité de moteur du type oscillant (20), comprenant :
un moteur (40), comportant un vilebrequin (41) s'étendant dans une direction de la largeur du véhicule ;
une unité de transmission, connectée au vilebrequin (41) sur un côté du moteur (40) ;
un embrayage de démarrage (54), pour assurer la transmission d'une force motrice d'un moteur de démarrage (59) vers le vilebrequin (41) ; et
un corps de logement de l'embrayage de démarrage, adapté pour recevoir l'embrayage de démarrage (54), **caractérisé en ce que** ledit corps (57) est agencé entre l'unité de transmission et le moteur (40), le corps de logement de l'embrayage de démarrage (57) comprenant :
un carter (57a), comportant une surface ouverte, ouverte dans la direction de la largeur du véhicule ;
un couvercle (57b), adapté pour recouvrir la surface ouverte et comprenant une partie de corps de couvercle en forme de plaque (57k) et une partie de cadre (571) agencée le long d'un bord externe de la partie de corps du couvercle (57k), de sorte à s'étendre de manière pratiquement perpendiculaire à la partie de corps du couvercle (57k), la partie de cadre (571) comprenant une surface de support (57d) opposée à la surface ouverte et comportant une première rainure annulaire (57j) ; et
un premier élément de joint d'étanchéité annulaire (57c), agencé entre le carter (57a) et le couvercle (57b) et ajusté au moins partiellement dans la première rainure annulaire (57j).

2. Véhicule (10) selon la revendication 1, dans lequel l'unité de moteur du type oscillant (20) comprend en outre :
un générateur (70), connecté au vilebrequin (41) sur un côté du moteur (40) opposé à l'unité de transmission ; et
un ventilateur (80) connecté au vilebrequin (41) sur le même côté du moteur (40) que le générateur (70), pour aspirer de l'air.

3. Véhicule (10) selon les revendications 1 ou 2, dans lequel l'unité de transmission est adaptée pour transmettre la rotation du vilebrequin (41) vers une roue arrière (30b) par l'intermédiaire d'un élément de transmission (52) agencé à l'extérieur du moteur (40), dans la direction de la largeur du véhicule, de sorte à s'étendre à partir de la roue arrière (30b) dans une direction longitudinale du véhicule (10).

4. Véhicule (10) selon l'une quelconque des revendications précédentes, comprenant en outre un deuxième élément de joint d'étanchéité (57f), à travers lequel le vilebrequin (41) est inséré ; et
la partie de corps du couvercle (57k) comportant un trou d'insertion du vilebrequin (57h), à travers lequel le vilebrequin (41) est inséré ; et
le trou d'insertion (57h) du vilebrequin (41) comportant sur une surface périphérique interne de celui-ci une deuxième rainure annulaire (57i), dans laquelle est insérée au moins une partie du deuxième élément de joint d'étanchéité (57f).

5. Véhicule (10) selon les revendications 3 et 4, dans lequel l'unité de transmission comprend une poulie d'entraînement (51) autour de laquelle l'élément de transmission (52) est étiré, la poulie d'entraînement (51) englobant une partie de réception du vilebrequin, à travers laquelle le vilebrequin est inséré.

6. Véhicule (10) selon la revendication 5, dans lequel le vilebrequin (41) comprend :
des première et deuxième parties en dents de scie (41b, 41c), formées sur au moins une partie d'une surface périphérique externe du vilebrequin (41), sur un côté sur lequel est agencé le corps de logement de l'embrayage de démarrage (57), une ligne médiane du véhicule (c) constituant une référence, la première partie en dents de scie (41b) étant adaptée pour s'engager dans la partie de réception du vilebrequin et la deuxième partie en dents de scie (41c) étant adaptée pour s'engager dans l'embrayage de démarrage (54) ; et
une partie plate n'ayant pas une forme en dents de scie (41d) étant formée sur la surface périphérique externe du vilebrequin (41), entre la première partie en dents de scie (41b) et la deuxième partie en dents de scie (41c).

7. Véhicule (10) selon l'une quelconque des revendications précédentes, dans lequel un radiateur (90) est agencé à l'extérieur du ventilateur (80), dans la direction de la largeur du véhicule et latéralement par rapport au ventilateur (80).

8. Véhicule (10) selon l'une quelconque des revendications précédentes, comprenant en outre un couvercle de ventilateur (81) adapté pour recouvrir le ventilateur (80), et comprenant :
un orifice de décharge (81d, 81f), à travers lequel l'air aspiré par le ventilateur (80) est déchargé ; et
plusieurs parties en forme de tige (81 e, 81f), agencées à un intervalle prédéterminé sur l'orifice de décharge (81d, 81f), les parties en forme de tige (81e, 81f) étant effilées de sorte à se rétrécir dans une direction de décharge de l'air (F).

9. Véhicule (10) selon l'une quelconque des revendications précédentes, dans lequel le corps de logement de l'embrayage de démarrage (57) assure le stockage d'un liquide adapté pour refroidir l'embrayage de démarrage (54).

10. Véhicule du type enjambeur (10), comprenant une unité de moteur du type oscillant (20), englobant :
un moteur (40), comportant un vilebrequin (41) s'étendant dans une direction de la largeur du véhicule ;
une unité de transmission, connectée au vilebrequin (41) sur un côté du moteur (40), pour transmettre la rotation du vilebrequin (41) vers une roue arrière (30b) par l'intermédiaire d'un élément de transmission (52) ;
un générateur (70), connecté au vilebrequin (41) sur l'autre côté du moteur (40) ; et
un ventilateur (80), connecté au vilebrequin (41) sur l'autre côté du moteur (40), pour guider un air extérieur ; et
l'élément de transmission (52) étant agencé à l'extérieur du moteur (40), dans la direction de la largeur du véhicule, de sorte à s'étendre à partir de la roue arrière (30b) dans une direction longitudinale du véhicule (10) ;
l'unité de moteur du type oscillant (20) comprenant un corps de logement de l'embrayage de démarrage (57), pour recevoir un embrayage de démarrage (54), pour assurer la transmission d'une force motrice d'un moteur de démarrage (59) servant au démarrage du moteur (40) ; et **caractérisé en ce que**
le corps de logement de l'embrayage de démarrage (57) est agencé entre l'unité de transmission et le moteur (40).
